# EUROPÄISCHE PATENTSCHRIFT

(11) **EP 2 356 021 B1**
(45) Veröffentlichungstag und Bekanntmachung des Hinweises auf die Patenterteilung: **10.04.2013**
(21) Anmeldenummer: 09751819.5
(22) Anmeldetag: 10.11.2009
(51) Int. Cl.: B64C 9/02, B64C 9/22

(54) **FLÜGEL MIT EINER KRÜGER-KLAPPE UND EINER SPALTABDECKUNGSVORRICHTUNG UND ENTSPRECHENDES VERFAHREN**
WING WITH A KRUEGER FLAP AND A GAP COVERING DEVICE, AND A CORRESPONDING METHOD
AILE AVEC UN VOLET KRUEGER ET UN DISPOSITIF DE RECOUVREMENT D'UNE FENTE, ET UN PROCÉDÉ CORRESPONDANT

(30) Priorität: 10.11.2008 DE 102008056655; 10.11.2008 US 112898 P
(43) Veröffentlichungstag der Anmeldung: 17.08.2011
(73) Patentinhaber: Airbus Operations GmbH, 21129 Hamburg (DE); Airbus Operations Limited, Bristol, Bristol BS99 7AR (GB)
(72) Erfinder: SCHLIPF, Bernhard, 28201 Bremen (DE); PAYNE, Christoper, BS21 5 BY Clevedon (GB); GIBBERT, Markus, 28199 Bremen (DE); DOSTMANN, Tom, 09439 Amtsberg-Dittersdorf (DE)
(74) Vertreter: Schatt, Markus F.
(86) Internationale Anmeldenummer: PCT/EP2009/008018
(87) Internationale Veröffentlichungsnummer: WO 2010/052022

(56) Entgegenhaltungen:
- GB-A- 2 003 098
- GB-A- 2 260 521
- US-A- 2 169 416
- US-A- 3 363 859
- US-A- 3 375 998
- US-A- 3 493 196

## Beschreibung

Die Erfindung betrifft einen Flügel mit einer Stellklappe und ein Verfahren zur Verstellung einer Krüger-Klappe an einem Hauptflügel eines Flügels.

Aus der US 4 427 168 ist eine aus einer einteiligen Krüger-Klappe und einer Dichtungsklappe gebildete Flügelnase bekannt. Bei dem Ausfahren der Krügerklappe wird auch die Dichtungsklappe in die Umströmung der Flügelnase geklappt.

Aus der US 4 427 416 ist eine Spaltabdeckungs-Klappe für eine Hinterkantenklappen-System bekannt.

Aufgabe der Erfindung ist, einen Flügel mit einer Krüger-Klappe und einer Spaltabdeckungs-Vorrichtung sowie ein Verfahren zur Verstellung einer Krüger-Klappe an einem Hauptflügel eines Flügels bereitzustellen, mit dem jeweils mechanisch sichere Verstellbewegungen einer Spaltabdeckungs-Klappe der Spaltabdeckungs-Vorrichtung und aerodynamisch effiziente Verstellbewegungen der Stellklappe und der Spaltabdeckungs-Klappe realisierbar sind.

Diese Aufgabe wird mit den Merkmalen der unabhängigen Patentansprüche gelöst. Weitere Ausführungsformen sind in den auf diese rückbezogenen Unteransprüchen angegeben.

Erfindungsgemäß ist insbesondere ein Flügel mit einer Stellklappe und mit einer Spaltabdeckungs-Vorrichtung vorgesehen. Die Stellklappe kann generell ein am Flügel eines Flugzeugs verstellbar angeordneter aerodynamischer Körper und dabei z.B. ein Vorflügel, eine Hinterkanten-Klappe oder ein Spoiler sein. Die Stellklappe ist an einem Randbereich oder einer Ausnehmung eines Flügels zwischen einer eingefahrenen und einer ausgefahrenen Stellung bewegbar. Dabei kann der Randbereich Teil einer Ausnehmung des Flügels sein, in den die Stellklappe einfahren kann, oder der Rand eines Endabschnitts des Flügels sein, an dem z.B. ein Vorflügel oder eine Hinterkanten-Klappe angeordnet ist. In der eingefahrenen Stellung der Stellklappe liegt deren Unterseite dem Inneren des Flügels und deren entgegengesetzt zu der Unterseite gelegene Außenseite an der Umströmung des Flügels an.

Die Spaltabdeckungs-Vorrichtung weist einen Stellhebel und eine an diesem angeordnete Spaltabdeckungs-Klappe mit einer Strömungsoberfläche auf. Der Stellhebel mit der Spaltabdeckungs-Klappe ist mittels einer Vorspannvorrichtung in eine erste Stellung vorgespannt, bei der sich die Spaltabdeckungs-Klappe im Inneren des Flügels befindet. Nach der Erfindung ist die Stellklappe und der Stellhebel mit der Spaltabdeckungs-Klappe mechanisch derart gekoppelt, dass bei dem Bewegen der Stellklappe in ihre eingefahrene Stellung ein Bewegen des Stellhebels entgegen der durch die Vorspannvorrichtung bewirkten Vorspannung in eine zweite Stellung erfolgt. Dabei verläuft die Strömungsoberfläche der Spaltabdeckungs-Klappe in der zweiten Stellung des Stellhebels in der Längsrichtung dieser Strömungsoberfläche, gesehen zwischen der Oberseite der eingefahrenen Stellklappe und der Flügel-Strömungsoberfläche. In diesem Zustand bildet somit die Strömungsoberfläche der Spaltabdeckungs-Klappe mit der Oberseite der eingefahrenen Stellklappe und der Flügel-Strömungsoberfläche Teile einer Strömungsoberfläche mit einem einheitlichen Verlauf.

Unter Bilden von "Teilen einer Strömungsoberfläche mit einem einheitlichen Verlauf" wird in diesem Zusammenhang verstanden, dass die einander benachbarten Strömungsoberflächen der Stellklappe, der Spaltabdeckungs-Klappe und des Flügels eine aerodynamische Konturlinie und somit eine effiziente Strömungsoberfläche bilden, und dass insbesondere die Spaltabdeckungs-Klappe nicht in die Umströmung des Flügels hineinragt Insbesondere deckt die Spaltabdeckungs-Klappe dabei den Spalt zwischen den Strömungsoberflächen der Stellklappe und des Flügels ab oder zumindest weitgehend, d.h. zumindest zu 80 %, ab.

Die Spaltabdeckungs-Vorrichtung weist insbesondere auf:
- den Stellhebel mit einem mit einer Anlagevorrichtung versehenen ersten Endabschnitt und einem entgegengesetzt zu diesem am Stellhebel angeordneten zweiten Endabschnitt,
- die an dem zweiten Endabschnitt angeordnete Spaltabdeckungs-Klappe mit der Strömungsoberfläche,
- eine Lagerungsvorrichtung zur drehbaren Lagerung des Stellhebels zwischen der ersten und der zweiten Stellung an einem Befestigungsbeschlag des Flügels,
- die Vorspannvorrichtung zur Vorspannung des Stellhebels in die zweite Stellung, wobei der Stellhebel und die Stellklappe derart angeordnet sind, dass in einer Anfangsphase der Bewegung der Stellklappe von der eingefahrenen Stellung in die ausgefahrene Stellung die Anlagevorrichtung aufgrund der Federvorspannung an der in der eingefahrenen Stellung der Stellklappe zum Inneren des Flügels gerichteten Unterseite der Stellklappe anliegt, während die Spaltabdeckungs-Klappe in das Innere des Flügels einfährt.

Die Anlagevorrichtung kann insbesondere eine der Stellklappe 1 zugewandte konkav gekrümmte Außenkontur aufweisen. Insbesondere kann die Anlagevorrichtung als drehbar an dem ersten Endabschnitt gelagertes Rad gebildet sein. Das Rad der Anlagevorrichtung kann aus elastischem Kunststoff gebildet sein.

Die Spalt-Abdeckungsklappe kann plattenförmig gebildet sein.

Weiterhin kann der benachbart an dem Endstück des Flügels gelegene Rand der Spalt-Abdeckungsklappe elastisch ausgebildet sein.

Generell kann die Spalt-Abdeckungsklappe an ihrem an der Oberfläche des Flügels anliegenden Rand eine Abschrägung aufweisen, die von der Strömungsoberfläche der Spaltabdeckungs-Klappe ausgeht.

Die Vorspannvorrichtung kann eine Feder aufweisen, die an dem Stellhebel und dem Befestigungsbeschlag angebracht ist. Die Feder kann dabei einerseits an einer ersten Halterung des Befestigungsbeschlags des Flügels und andererseits an einer zweiten Halterung am Stellhebel gehalten werden, wobei die zweite Halterung zwischen der Lagerungsvorrichtung und dem zweiten Endabschnitt gelegen ist.

Der Stellhebel kann insbesondere gekrümmt ausgebildet sein, wobei die der eingefahrenen Spaltabdeckungsklappe zugewandte Oberfläche konkav geformt ist.

Die Strömungsoberfläche des Flügels kann die Unterseite des Flügels sein.

Nach einem weiteren Aspekt der Erfindung ist ein Verfahren zur Verstellung einer Krüger-Klappe an einem Hauptflügel eines Flügels nach dem Anspruch 13 vorgesehen.

Im Folgenden werden Ausführungsbeispiele der Erfindung an Hand der beigefügten Figuren beschrieben, die zeigen:

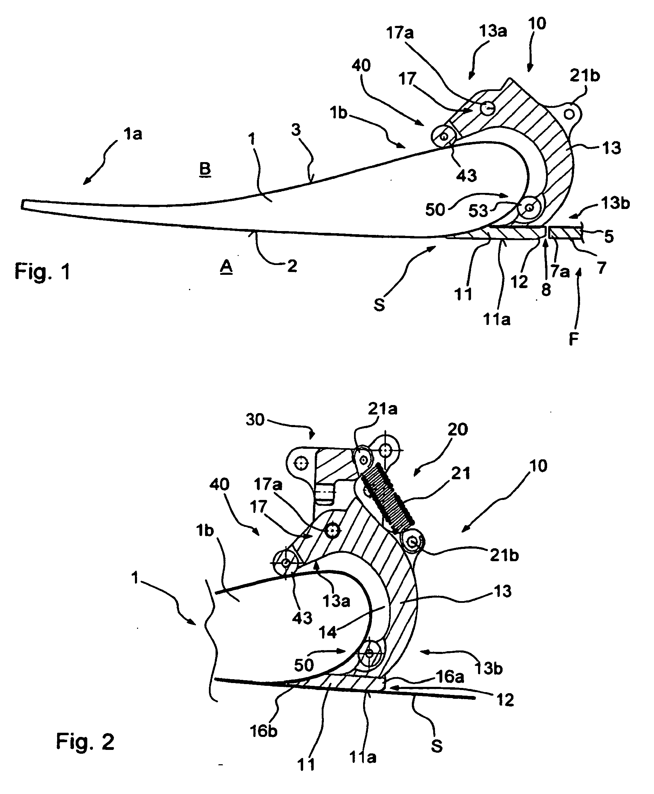

- Figur 1 eine Schnittdarstellung einer Stellklappe in Form eines Vorflügels, der an einem Flügel eines Flugzeugs angeordnet ist, sowie ein Ausführungsbeispiel der erfindungsgemäßen Spaltabdeckungs-Vorrichtung mit einem Stellhebel und einer an diesem angebrachten Spaltabdeckungs-Klappe, wobei sich der Stellhebel in der ersten Stellung des Stellhebels in einer Lage befindet, in der die Strömungsoberfläche der Spaltabdeckungs-Klappe eine Fortsetzung der Oberfläche des nicht dargestellten Hauptflügels bildet,
- Figur 2 eine Schnittdarstellung der Figur 1 mit einer detaillierten Darstellung des Ausführungsbeispiels der erfindungsgemäßen Spaltabdeckungs-Vorrichtung in ihrer ersten Stellung,

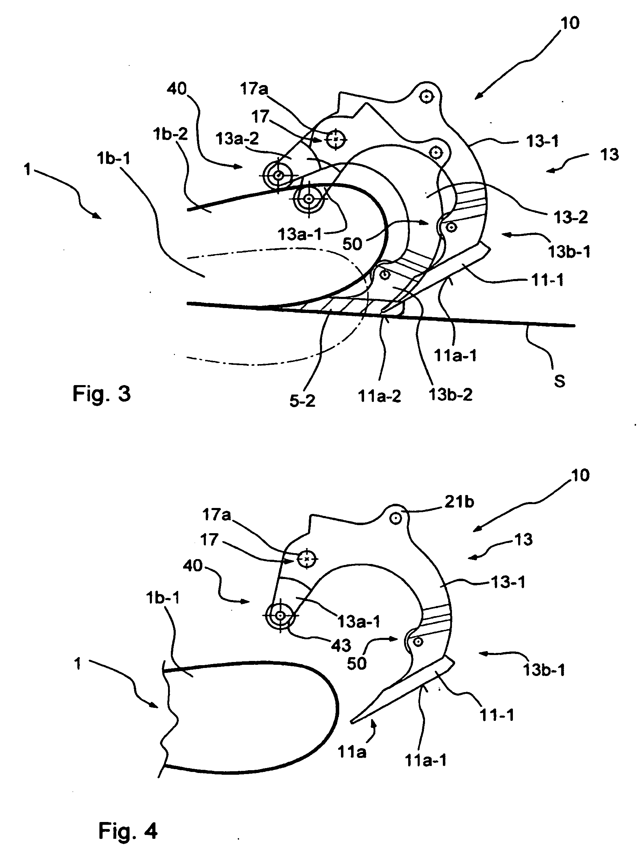

- Figur 3 eine vereinfachte Schnittdarstellung des Ausführungsbeispiels der erfindungsgemäßen Spaltabdeckungs-Vorrichtung nach der Figur 2, wobei ein Teil des Vorflügels in einer ausgefahrenen und die Spaltabdeckungs-Vorrichtung in der ersten Stellung gezeigt ist und weiterhin in einer diese Darstellung zeichnerisch überlagernden Darstellung der Vorflügel in einer eingefahrenen Stellung und die Spaltabdeckungs-Vorrichtung in einer zweiten Stellung mit einer eingefahrenen Spaltabdeckungs-Klappe gezeigt ist,
- Figur 4 eine vereinfachte Schnittdarstellung des Ausführungsbeispiels der erfindungsgemäßen Spaltabdeckungs-Vorrichtung nach der Figur 2, in der lediglich derjenige Teil der Figur 3 gezeigt ist, der den Teil des Vorflügels in einer ausgefahrenen Stellung und die Spaltabdeckungs-Vorrichtung in einer zweiten Stellung mit einer eingefahrenen Spaltabdeckungs-Klappe zeigt.

Die Figur 1 zeigt eine Anordnung einer Stellklappe 1 und ein Ausführungsbeispiel der erfindungsgemäßen Spaltabdeckungs-Vorrichtung 10 mit einer Spaltabdeckungs-Klappe 11. Von dem Hauptflügel F, an dem die Stellklappe 1 angeordnet ist, ist in der Figur 1 nur ein Stück seiner Außenhaut 5 mit einer Oberfläche 7 dargestellt, die die Unterseite des Hauptflügels bildet. Die Stellklappe 1 ist ein Vorflügel, der in der Figur 1 in der eingefahrenen Stellung gezeigt ist. Der Vorflügel ist im Bereich eines ersten Abschnitts 1a oder an dem ersten Abschnitt 1a an einer Befestigungsvorrichtung des Flügels F mittels einer nicht dargestellten Vorflügel-Verstellmechanik angelenkt. In Bezug auf die Längsrichtung des Vorflügels 1 ist ein zweiter Abschnitt 1 b entgegengesetzt zu dem ersten Abschnitt 1a gelegen. Bei dem dargestellten Ausführungsbeispiel ist die Vorflügel-Verstellmechanik derart gebildet, dass beim Ausfahren des Vorflügels 1 der zweite Abschnitt 1 b als schwenkbares Ende des Vorflügels in der Zeichnungsebene der Figur 1 zunächst nach unten und nach rechts bewegt wird. In der ausgefahrenen Stellung ist der zweite Abschnitt 1 b links des ersten Abschnitts gelegen. Insofern kann der Vorflügel auch als Krüger-Klappe bezeichnet werden.

Erfindungsgemäß ist ein Hauptflügel F mit einer Stellklappe 1 und mit einer Spaltabdeckungs-Vorrichtung 10 vorgesehen. Die Stellklappe 1 kann generell ein am Hauptflügel F oder einem anderen Strukturbauteil eines Flugzeugs verstellbar angeordneter aerodynamischer Körper und dabei z.B. ein Vorflügel, eine Hinterkanten-Klappe oder ein Spoiler sein. Die Stellklappe 1 ist an einem Randbereich eines Flügels F zwischen einer eingefahrenen und einer ausgefahrenen Stellung bewegbar. Dabei kann der Randbereich Teil einer Ausnehmung des Flügels F sein, in den die Stellklappe 1 einfahren kann, oder, wie in Figur 1 gezeigt, der Rand eines Endabschnitts des Flügels sein, an dem z.B. ein Vorflügel oder eine Hinterkanten-Klappe angeordnet ist.

Die Erfindung und insbesondere die erfindungsgemäße Spaltabdeckungs-Vorrichtung 10 kann auch auf andersartig verstellbare Vorflügel und weiterhin generell auf andere Stellklappen eines Flugzeugs angewendet werden. Die Spaltabdeckungs-Vorrichtung 10 dient dabei einer Abdeckung eines Spaltes, der in der geschlossenen Stellung der Stellklappe 1 zwischen dieser und der Außenfläche der Flugzeugsstruktur und insbesondere des Flügels bestehen würde, wenn die erfindungsgemäße Spaltabdeckungs-Vorrichtung mit der Spaltabdeckungs-Klappe 11 nicht vorhanden wäre.

Die erfindungsgemäße Spaltabdeckungs-Vorrichtung 10 weist weiterhin einen Stellhebel 13 auf, an dem die Spaltabdeckungs-Klappe 11 angebracht ist. Der Stellhebel 13 ist zwischen einer ersten und einer zweiten Stellung an einem Befestigungsbeschlag (nicht dargestellt) des Flügels F bewegbar. In dem dargestellten Ausführungsbeispiel ist der Stellhebel 13 mittels einer Lagerungsvorrichtung in Form eines Drehgelenks 17 drehbar an dem Befestigungsbeschlag gelagert. Von dem Drehgelenk 17 ist bei dem in den Figuren 1 bis 4 dargestellten Ausführungsbeispiel die Bohrung 17a des Stellhebels 13 als Teil des Drehgelenks 17 zur Aufnahme einer Drehachse dargestellt.

Generell kann die Lagerungsvorrichtung 17 auch anders und z.B. mit einer an einem Befestigungsbeschlag des Flügels angebrachten Führungsbahn gestaltet sein, in der ein an dem Stellhebel angebrachtes Führungselement aufgenommen und bewegbar geführt ist.

Mit der Lagerungsvorrichtung 17 ist der Stellhebel 13 zwischen einer ersten und einer zweiten Stellung an einem Befestigungsbeschlag 30 des Flügels F generell derart gelagert, dass der Stellhebel 13 zwischen einer ersten Stellung und einer zweiten Stellung bewegbar ist, wobei der Stellhebel 13 mittels einer Vorspannvorrichtung 20 zur Vorspannung des Stellhebels 13 in dessen erste Stellung (Figur 4) vorgespannt ist.

Dabei ist erfindungsgemäß zusätzlich die Bewegung der Stellklappe 1 und des Stellhebels 13 mit der Spaltabdeckungs-Klappe 11 derart mechanisch gekoppelt, dass das Bewegen des Stellhebels 13 in seine eingefahrene Stellung (Figuren 1 und 2) ein Bewegen der Spaltabdeckungs-Klappe 11 entgegen der durch die Vorspannvorrichtung 20 bewirkten Vorspannung des Stellhebels 13 von einer Stellung im Inneren des Flügels B in eine Spalt-Abdeckungsstellung bewirkt. In der zweiten Stellung des Stellhebels 13 verläuft die Strömungsoberfläche 11a der Spaltabdeckungs-Klappe zwischen der Oberseite 2 der eingefahrenen Stellklappe 1 und der jeweils an der Spaltabdeckungs-Klappe 11 anliegenden Flügel-Strömungsoberfläche 7. In der Figur 2 ist die sich aus der Oberseite 2 der eingefahrenen Stellklappe 1, der Strömungsoberfläche 11a der Spaltabdeckungs-Klappe 11 und der sich neben dieser erstreckenden Flügel-Strömungsoberfläche 7 des Flügels ergebende Gesamt-Außenkontur als Hilfslinie S eingezeichnet, die anschaulich zeigt, dass in diesem Zustand der Stellklappe 1 und der Spaltabdeckungs-Klappe 11 die Strömungsoberfläche 11a der Spaltabdeckungs-Klappe 11 mit der Oberseite 2 der eingefahrenen Stellklappe 1 und der Flügel-Strömungsoberfläche 7 Teile einer Strömungsoberfläche mit einem einheitlichen Verlauf bilden.

In den Darstellungen der Figuren 1 und 2 ist die Stellklappe 1 in ihrer eingefahrenen Stellung gezeigt, in der deren Oberseite oder Außenseite 2 an der äußeren Umgebung A oder an der Umströmung der Stellklappe 1 oder des Flügels F und in der deren entgegengesetzt zu der Oberseite 2 gelegene Unterseite 3 dem Inneren B des Flügels zugewandt ist. Weiterhin ist in den Darstellungen der Figuren 1 und 2 der Stellhebel 13 in der ersten Stellung gelegen, in der die Strömungsoberfläche 11a der Spaltabdeckungs-Klappe 11 eine Fortsetzung der Oberfläche des nicht dargestellten Hauptflügels bildet, d.h. die Strömungsoberfläche 11a der Spaltabdeckungs-Klappe 11, die Oberseite 2 der eingefahrenen Stellklappe 1 und die Flügel-Strömungsoberfläche 7 bilden Teile einer Strömungsoberfläche S mit einem einheitlichen Verlauf. In den Figuren 2 und 3 ist der einheitliche Verlauf der Strömungsoberfläche, der sich anschaulich aus den vorgenannten Teilen ergibt, anschaulich als Hilfslinie S eingezeichnet.

Nach einem erfindungsgemäßen Ausführungsbeispiel weist die Spaltabdeckungs-Vorrichtung 10 zur mechanischen Kopplung der Stellklappe 1 und des Stellhebels 13 mit der Spaltabdeckungs-Klappe 11 auf:
- den Stellhebel 13 mit einem mit einer Anlagevorrichtung 40 versehenen ersten Endabschnitt 13a und einem zweiten Endabschnitt 13b,
- die an dem zweiten Endabschnitt 13b angeordnete Spaltabdeckungs-Klappe 11 mit der Strömungsoberfläche 11a,
- eine Lagerungsvorrichtung 17 zur drehbaren Lagerung des Stellhebels zwischen der ersten und der zweiten Stellung an einem Befestigungsbeschlag 30 des Flügels F,
- die Vorspannvorrichtung 20 zur Vorspannung des Stellhebels 13 in die zweite Stellung, wobei der Stellhebel 13 und die Stellklappe 1 derart angeordnet sind, dass in einer Anfangsphase der Bewegung der Stellklappe 1 von der eingefahrenen Stellung in die ausgefahrene Stellung die Anlagevorrichtung aufgrund der Federvorspannung an der in der eingefahrenen Stellung der Stellklappe 1 zum Inneren B des Flügels F gerichteten Unterseite der Stellklappe 1 anliegt, während die Spaltabdeckungs-Klappe 11 in das Innere B des Flügels einfährt.

Der Stellhebel kann insbesondere als insgesamt gekrümmtes Teil mit einer der Stellklappe 1 zugewandten, konkaven Innenseite 14 ausgebildet sein.

Bei dem dargestellten erfindungsgemäßen Ausführungsbeispiel weist die Vorspannvorrichtung 20 eine Spiralfeder 21 auf, die einerseits an einer ersten Halterung 21a des Befestigungsbeschlags 30 des Flügels F und andererseits an einer zweiten Halterung 21 b am Stellhebel 13 gehalten wird. Die Vorspannvorrichtung 20 kann auch auf andere Weise und z.B. als Blattfeder gestaltet sein. Dabei kann insbesondere die zweite Halterung 21b zwischen der Lagerungsvorrichtung 17, d.h. dem stellhebelseitigen Teil derselben, und dem zweiten Endabschnitt 13b gelegen sein.

Die Anlagevorrichtung 40 am ersten Endabschnitt 13a des Stellhebels 13 kann insbesondere eine der Stellklappe 1 zugewandte, von der Stellklappe 1 aus gesehen konvex gekrümmte Außenkontur aufweisen und kann insbesondere aus elastischem Material gebildet sein. In der dargestellten Ausführungsform der Anlagevorrichtung 40 ist diese als ein drehbar an dem ersten Endabschnitt 13a gelagertes Rad 43 ausgebildet. Bei dem Ausfahren der Stellklappe 1 aus ihrer eingefahrenen Stellung oder bei dem Einfahren derselben in ihre eingefahrene Stellung entsteht eine Relativbewegung der an der Stellklappe 1 anliegenden konkav gekrümmten Außenkontur des ersten Endabschnitts 13a bzw. des Rads 43 gegenüber der Außenkontur 3 der Stellklappe 1. Die Ausbildung der Anlagevorrichtung 40 als drehbar gelagertes Rad 43 reduziert also die Reibung bei der genannten Relativbewegung während des Aus- und Einfahrens der Stellklappe 1.

Das an der Stellklappe 1 in ihrer eingefahrenen Stellung anliegende Endstück der Anlagevorrichtung 40 bzw. das Rad 43 kann insbesondere aus einem elastischen Material, insbesondere elastischem Kunststoff, gebildet sein, um eine Beschädigung der Außenkontur der Stellklappe 1 zu vermeiden.

An dem Stellhebel 13 kann eine weitere oder zweite Anlagevorrichtung 50 vorgesehen sein, um den Stellhebel 13 in seiner zweiten Stellung abzustützen und zu erreichen, dass das der Stellklappe 1 zugewandte Endstück 16b der Spalt-Abdeckungsklappe 11 von diesem in der zweiten Stellung der Spalt-Abdeckungsklappe 11 in vorbestimmtem Maße beabstandet ist. Die zweite Anlagevorrichtung 50 ist am Stellhebel 13 in der Nähe der Spalt-Abdeckungsklappe 11 oder am zweiten Endabschnitt 13b gelegen. Insbesondere sind die erste Anlagevorrichtung 40 und die zweite Anlagevorrichtung 50 relativ zueinander derart gelegen, dass in der zweiten Stellung des Stellhebels 13 die an den Anlagevorrichtungen 40, 50 anliegende Außenfläche der Spalt-Abdeckungsklappe 11 in Richtung zur konkaven Innenseite 14 des Stellhebels 13 hinragt. Dabei ragt die Außenfläche der Spalt-Abdeckungsklappe 11 über die Verbindungslinie der Berührungsstellen der Anlagevorrichtungen 40, 50 mit der an diesen anliegenden Außenfläche der Spalt-Abdeckungsklappe 11 hinaus zur konkaven Innenseite 14 des Stellhebels 13 hin. Dabei kann der Stellhebel insbesondere als insgesamt gekrümmtes Teil mit einer der Stellklappe 1 zugewandten, konkaven Innenseite 14 ausgebildet sein.

Die am zweiten Endabschnitt 13b des Stellhebels 13 angeordnete zweite Anlagevorrichtung 50 kann eine der Stellklappe 1 zugewandte, von der Stellklappe 1 aus gesehen konvex gekrümmte Außenkontur aufweisen und kann insbesondere aus elastischem Material gebildet sein. In der dargestellten Ausführungsform der Anlagevorrichtung 50 ist diese als ein drehbar.an dem zweiten Endabschnitt 13b gelagertes Rad 53 ausgebildet. Da bei dem Ausfahren der Stellklappe 1 aus ihrer eingefahrenen Stellung oder bei dem Einfahren derselben in ihre eingefahrene Stellung eine Relativbewegung der an der Stellklappe 1 anliegenden konkav gekrümmten Außenkontur des ersten Endabschnitts 13a bzw. des Rads 53 gegenüber der Außenkontur 3 der Stellklappe 1 entsteht, wird durch die Ausbildung der Anlagevorrichtung 50 als drehbar gelagertes Rad 53 die Reibung bei der genannten Relativbewegung während des Aus- und Einfahrens der Stellklappe 1 reduziert.

In den Figuren 3 und 4 ist die Kopplung der Bewegungen von Stellklappe 1 und Stellhebel 13 zumindest in der Endphase des Einfahrens der Stellklappe 1 in ihre eingefahrene Stellung (Figur 2) mittels der Anlagevorrichtung 40 gezeigt. In der Figur 3 ist sowohl die eingefahrene Stellung der Stellklappe 1 als auch eine ausgefahrene Stellung der Stellklappe 1 sowie die zugehörigen Stellungen der Anlagevorrichtung 40 überlagert dargestellt. In den Figuren 3 und 4 ist ein Endabschnitt 1b der Stellklappe 1 in einem ausgefahrenen Zustand gezeigt und mit dem Bezugszeichen 1 b-1 versehen, wohingegen der Endabschnitt 1 b in dem eingefahrenen Zustand der Stellklappe 1 mit dem Bezugszeichen 1 b-2 versehen ist. Dementsprechend sind der Stellhebel 13, dessen 13a erster und 13b zweiter Endabschnitt und die Spaltabdeckungs-Klappe 11 in der ersten Stellung der Spaltabdeckungs-Vorrichtung 10 mit dem Bezugszeichen 13-1, 13a-1, 13b-1 bzw.11-1 und in der zweiten Stellung der Spaltabdeckungs-Vorrichtung 10 mit dem Bezugszeichen 13-2, 13a-2, 13b-2 bzw.11-2 versehen.

Die Spaltabdeckungs-Klappe 11 ist bei der dargestellten Ausführungsform als plattenförmiges Teil gebildet. Diese kann generell auch andersartig gestaltet sein. Die Spaltabdeckungs-Klappe 11 kann insbesondere einstückig mit dem Stellhebel 13 gebildet und/oder einstückig mit dieser hergestellt sein. Insbesondere kann der Stellhebel 13 zusammen mit der Spaltabdeckungs-Klappe 11 als ein einstückiges Faseverbund-Bauteil hergestellt sein.

Weiterhin kann die Spalt-Abdeckungsklappe 11 an einem an der Oberfläche 7 des Flügels F anliegenden Rand eine Abschrägung 12 aufweisen, die von der Strömungsoberfläche 11a der Spaltabdeckungs-Klappe 11 ausgeht. Dadurch kann erreicht werden, dass der benachbart an dem Endstück 7a des Hauptflügels F gelegene Rand 16a der Spalt-Abdeckungsklappe 11 in der zweiten oder geschlossenen Stellung der Spalt-Abdeckungsklappe 11 möglichst nahe an diesem Rand 16a gelegen ist und ein möglichst kleiner Zwischenraum 8 zwischen der Spalt-Abdeckungsklappe 11 und dem Endstück 7a des Hauptflügels 7 in dieser Stellung der Spalt-Abdeckungsklappe 11 verbleibt bei einem gleichzeitigen Zulassen der Öffnungs-und Schließbewegung der Spalt-Abdeckungsklappe 11 relativ zum benachbart an dieser gelegenen Endstück 7a des Hauptflügels F.

Alternativ oder zusätzlich kann der benachbart an dem Endstück 7a des Flügels F gelegene Rand 16a der Spalt-Abdeckungsklappe 11 elastisch ausgebildet sein. Dabei kann insbesondere an dem Rand 16a ein elastisches Teil wie z.B. eine elastische Abdeckkappe aufgesetzt sein. Weiterhin kann ein solcher elastisch ausgebildeter Rand 16a derart gestaltet sein und sich gegenüber dem Endstück 7a des Hauptflügels 7 erstrecken, dass dieser in der zweiten oder geschlossenen Stellung der Spalt-Abdeckungsklappe 11 von dem Endstück 7a des Hauptflügels 7 gedrückt oder gepresst wird, so dass kein Zwischenraum 8 zwischen der Spalt-Abdeckungsklappe 11 in ihrer zweiten Stellung und dem Endstück 7a des Hauptflügels 7 besteht. Dabei dichtet die Spalt-Abdeckungsklappe 11 den sich in der ausgefahrenen Stellung der Stellklappe 1 zwischen dieser und dem Endstück 7a des Flügels F ergebenden Spalt 8 ab.

## Patentansprüche

1. Flügel (F), aufweisend einen Hauptflügel mit einer Flügel-Strömungsoberfläche (7), eine zwischen einer eingefahrenen und einer ausgefahrenen Stellung bewegbare Krüger-Klappe (1) sowie eine Spaltabdeckungs-Vorrichtung (10) mit einem Stellhebel (13) und einer an diesem angeordneten Spaltabdeckungs-Klappe (11) mit einer Strömungsoberfläche (11 a), wobei in einer teilweise ausgefahrenen Stellung der Krüger-Klappe (1) zwischen dieser und einer Flügel-Strömungsoberfläche (7) ein Spalt ausgebildet ist,
**dadurch gekennzeichnet,**
■ **dass** der Stellhebel (13) drehbar am Hauptflügel gelagert und mittels einer Vorspannvorrichtung (20) in eine erste Stellung vorgespannt ist, bei der die Strömungsoberfläche (11a) der Spaltabdeckungs-Klappe (11) im Inneren (B) des Hauptflügels, zwischen zwei entgegen gesetzt zueinander gelegenen Bereichen der Flügel-Strömungsoberfläche (7) des Hauptflügels gelegen ist, und
■ **dass** an dem Stellhebel (13) eine Anlagevorrichtung (40) derart angeordnet ist, dass diese beim Einfahren der Krüger-Klappe (1) und bei einer vorbestimmten Stellung der Krüger-Klappe (1) in Berührungskontakt mit derselben kommt und bei einem weiteren Einfahren der Krüger-Klappe (1) eine Bewegungskopplung zwischen derselben und dem Stellhebel (13) derart erfolgt, dass sich der Stellhebel (13) entgegen der durch die Vorspannvorrichtung (20) bewirkten Federkraft in eine zweite Stellung bewegt, bei der die Spaltabdeckungs-Klappe (11) den zwischen der eingefahrenen Krüger-Klappe (1) und einer Flügel-Strömungsoberfläche (7) des Hauptflügels bestehenden Spalt abdeckt.

2. Flügel nach dem Anspruch 1, **dadurch gekennzeichnet, dass** die Spaltabdeckungs-Vorrichtung (10) aufweist:
• die an einem zweiten Endabschnitt (13b) des Stellhebels (13) angeordnete Spaltabdeckungs-Klappe (11) mit der Strömungsoberfläche (11a),
• eine Lagerungsvorrichtung (17) zur drehbaren Lagerung des Stellhebels (13) zwischen der ersten und der zweiten Stellung an dem Hauptflügel, wobei der Stellhebel (13) einen mit der Anlagevorrichtung (40) als einer ersten Anlagevorrichtung (40) versehenen ersten Endabschnitt (13a) und einen, in Bezug auf die Lagerungsvorrichtung (17) entgegen gesetzt zu dem ersten Endabschnitt (13a) gelegenen zweiten Endabschnitt (13b) aufweist,
• eine an dem zweiten Endabschnitt (13b) angeordnete zweite Anlagevorrichtung (50) zur Positionierung des zweiten Endabschnitts (13b) des Stellhebels (13) in der eingefahrenen Stellung der Krüger-Klappe (1), bei der die zweite Anlagevorrichtung (50) an der Außenkontur (3) der Krüger-Klappe (1) anliegt.

3. Flügel nach Anspruch 1 oder 2, **dadurch gekennzeichnet, dass** die erste Anlagevorrichtung (40) eine der Krüger-Klappe (1) zugewandte konkav gekrümmte Außenkontur aufweist.

4. Flügel nach Anspruch 3, **dadurch gekennzeichnet, dass** die Anlagevorrichtung (40) ein drehbar an dem ersten Endabschnitt (13a) gelagertes Rad aufweist.

5. Flügel nach Anspruch 4, **dadurch gekennzeichnet, dass** das Rad der Anlagevorrichtung (40) aus elastischem Kunststoff gebildet ist.

6. Flügel nach einem der voranstehenden Ansprüche, **dadurch gekennzeichnet, dass** die Spalt-Abdeckungsklappe (11) plattenförmig gebildet ist.

7. Flügel nach einem der voranstehenden Ansprüche, **dadurch gekennzeichnet, dass** derjenige Rand (16a) der Spalt-Abdeckungsklappe (11), der benachbart an der Flügel-Strömungsoberfläche (7) des Hauptflügels gelegen ist, wenn sich die Spalt-Abdeckungsklappe (11) in ihrer zweiten Stellung befindet, elastisch ausgebildet ist.

8. Flügel nach einem der voranstehenden Ansprüche, **dadurch gekennzeichnet, dass** derjenige Rand (16a) der Spalt-Abdeckungsklappe (11), der benachbart an der Flügel-Strömungsoberfläche (7) des Hauptflügels (F) gelegen ist, wenn sich die Spalt-Abdeckungsklappe (11) in ihrer zweiten Stellung befindet, eine Abschrägung (12) aufweist, die von der Strömungsoberfläche (11a) der Spaltabdeckungs-Klappe (11) ausgeht.

9. Flügel nach einem der voranstehenden Ansprüche, **dadurch gekennzeichnet, dass** der Stellhebel (13) mittels der Lagerungsvorrichtung (17) an einem Befestigungsbeschlag (30) des Hauptflügels drehbar gelagert ist und dass die Vorspannvorrichtung (20) eine Feder aufweist, die an dem Stellhebel (13) und dem Befestigungsbeschlag (30) angebracht ist.

10. Flügel nach Anspruch 9, **dadurch gekennzeichnet, dass** die Feder einerseits an einer ersten Halterung (21a) des Befestigungsbeschlags (30) des Hauptflügels und andererseits an einer zweiten Halterung (21 b) am Stellhebel (13) gehalten wird, wobei die zweite Halterung (21b) zwischen der Lagerungsvorrichtung (17) und dem zweiten Endabschnitt (13b) gelegen ist.

11. Flügel nach einem der voranstehenden Ansprüche, **dadurch gekennzeichnet, dass** der Stellhebel (13) gekrümmt ausgebildet ist, wobei die der eingefahrenen Spaltabdeckungsklappe (11) zugewandte Oberfläche konkav geformt ist.

12. Flügel nach einem der voranstehenden Ansprüche, **dadurch gekennzeichnet, dass** die Strömungsoberfläche (7) des Flügels (F) die Unterseite des Flügels (F) ist.

13. Verfahren zur Verstellung einer Krüger-Klappe (1) an einem Hauptflügel eines Flügels (F) zwischen einer eingefahrenen und einer ausgefahrenen Stellung mit den Schritten:
beim Einfahren der Krüger-Klappe (1) ab einer vorbestimmten Stellung der Krüger-Klappe (1) Bewegungskopplung eines Stellhebels (13) und der Krüger-Klappe (1) durch Anliegen einer an dem Stellhebel (13) ausgebildeten Anlagevorrichtung (40) an einer Außenkontur (3) der Krüger-Klappe (1) derart, dass der Stellhebel (13) durch die Einfahrbewegung der Krüger-Klappe (1) entgegen einer Vorspannung einer zwischen der Krüger-Klappe (1) und dem Hauptflügel wirkenden Vorspannvorrichtung (20) gedreht wird und eine an dem Stellhebel (13) angeordnete Spaltabdeckungs-Vorrichtung (10) in einen Spalt zwischen der Krüger-Klappe (1) und dem Hauptflügel einfährt,
beim Ausfahren der Krüger-Klappe (1) Drehung des Stellhebels (13) mittels der Vorspannvorrichtung (20) und Bewegungskopplung des Stellhebels (13) und der Krüger-Klappe (1) durch Anliegen der Anlagevorrichtung (40) an der Außenkontur (3) der Krüger-Klappe (1) bis zu einer vorbestimmten Stellung der Krüger-Klappe (1), so dass die Spaltabdeckungs-Vorrichtung (10) von der Flügel-Außenkontur (7) aus gesehen in einen Bereich im Inneren (B) des Hauptflügels, zwischen zwei entgegen gesetzt zueinander gelegenen Bereichen der Flügel-Strömungsoberfläche (7) des Flügels (F) bewegt wird.

## Claims

1. A wing (F), comprising a main wing with a wing flow surface (7), an adjustable Krueger flap (1) which is moveable between a retracted and an extended state, a gap-covering device (10) with an adjustment lever (13) and a gap-covering flap (11) being disposed at the adjustment lever (13), wherein a gap is formed between the Krueger flap (1) and the wing flow surface (7), when the Krueger flap (1) is in a partially extended state,
**characterised in that**
■ the adjustment lever (13) is rotatably linked to the main wing and is pre-loaded by means of a pre-loading device (20) into a first state, in which the flow surface (11a) of the gap-covering flap (11) is located in the interior (B) of the main wing between two sections of the wing flow surface (7) of the main wing lying opposed to each other, and
■ **in that** a contact device (40) is disposed at the adjustment lever (13) such that the contact device (40) come in contact with the Krueger flap (1) during retraction of the Krueger flap (1) and at a predetermined state of the Krueger flap (1) and that, when the Krueger flap (1) is further retracted, a movement coupling between the Krueger flap (1) and the adjustment lever (13) takes place such that the adjustment lever (13) is moved, against the pre-load effected by the pre-loading device (20), into a second state in which the gap-covering flap (11) covers the gap between the retracted Krueger flap (1) and a wing flow surface (7) of the main wing.

2. The wing in accordance with Claim 1, **characterised in that** the gap-covering device (10) comprises:
■ the gap-covering flap (11) with the flow surface (11a) arranged on a second end section (13b) of the adjustment lever (13),
■ a pivot bearing (17) for pivotally bearing the adjustment lever (13) between the first and second state on the main wing, wherein the adjustment lever (13) comprises a first end section (13a) which is provided with the contact device (40) as a first contact device (40) and a second and section (13b) lying opposed to the first end section (13a) with regard to the mounting device (17),
■ a second contact device (50) being disposed at the second end section (13b) for positioning the second end section (13b) of the adjustment lever (13) in the retracted state of the Krueger flap (1) in which the second contact device (50) contacts the outer contour (3) of the Krueger flap (1).

3. The wing in accordance with Claim 1 or 2, **characterised in that** the first contact device (40) has a concave curved outer contour facing towards the adjustable flap (1).

4. The wing in accordance with Claim 3, **characterised in that** the contact device (40) has a wheel mounted on the first end section (13a) such that it can rotate.

5. The wing in accordance with Claim 4, **characterised in that** the wheel of the contact device (40) is formed from an elastic plastic.

6. The wing in accordance with one of the preceding claims, **characterised in that** the gap-covering flap (11) is formed in the shape of a plate.

7. The wing in accordance with one of the preceding claims, **characterised in that** the edge (16a) of the gap-covering flap (11) positioned adjacent to the wing flow surface (7) of the main wing, when the gap-covering flap (11) is in its second state, is designed to be elastic.

8. The wing in accordance with one of the preceding claims, **characterised in that** the edge (16a) of the gap-covering flap (11) positioned adjacent to the wing flow surface (7) of the main wing, when the gap-covering flap (11) is in its second state, has a chamfer (12) on its edge contacting the surface (7) of the wing (F), which extends from the flow surface (11a) of the gap-covering flap (11).

9. The wing in accordance with one of the preceding claims, **characterised in that** the adjustment lever (13) is pivotally mounted at a attachment fitting (30) of the main wing by means of the pivot bearing (17) and **in that** the pre-loading device (20) comprises a spring, which is fitted to the adjustment lever (13) and the attachment fitting (30).

10. The wing in accordance with Claim 9, **characterised in that** the spring on the one hand is held on a first retainer (21 a) of the attachment fitting (30) of the main wing and on the other hand on a second retainer (21 b) on the adjustment lever (13), wherein the second retainer (21 b) is positioned between the mounting device (17) and the second end section (13b).

11. The wing in accordance with one of the preceding claims, **characterised in that** the adjustment lever (13) is of curved design, wherein the surface facing towards the retracted gap-covering flap (11) has a concave shape.

12. The wing in accordance with one of the preceding claims, **characterised in that** the flow surface (7) of the wing (F) is the underside of the wing (F).

13. Method for adjusting a Krueger flap (1) at a main wing of a wing (F) between a retracted and an extended state with the steps:
■ during retraction of the Krueger flap (1) starting from a first state of the Krueger flap (1), coupling of the movement of a adjustment lever (13) and the Krueger flap (1) by contacting a contact device (40) being provided at the adjustment lever (13) and an outer contour (3) of the Krueger flap (1) such that the adjustment lever (13) is rotated by the retraction movement of the Krueger flap (1) against the pre-load effected by the pre-loading device (20) which is acting between the Krueger flap (1) and the main wing , and the gap-covering device (10) which is disposed at the adjustment lever (13) is moved into a gap between the Krueger flap (1) an the main wing
■ during extension of the Krueger flap (1) rotation of the adjustment lever (13) by means of the pre-loading device (20) and coupling the movement of the adjustment lever (13) and the Krueger flap (1) by the contact of the contact device (40) at the outer contour (3) of the Krueger flap (1) until a predetermined state of the Krueger flap (1) takes place, so that the gap-covering device (10) is moved, when viewed from the outer contour (7) of the wing, in an area in the interior (B) of the main wing which area lies between two areas of the flow surface (7) of the wing (F) being disposed opposed to each other.

## Revendications

1. Aile (F) présentant une aile principale comprenant une surface d'écoulement d'aile (7), un volet Krueger (1) mobile entre une position rentrée et sortie, ainsi qu'un dispositif de recouvrement d'une fente (10) comprenant un levier de réglage (13) et un volet de recouvrement d'une fente (11) disposé sur celui-ci avec une surface d'écoulement (11a), sachant que dans une position partiellement sortie du volet Krueger (1), une fente est formée entre celui-ci et une surface d'écoulement d'aile (7),
**caractérisée en ce**
**que** le levier de réglage (13) est placé de manière rotative sur l'aile principale et est précontraint par un dispositif de mise en précontrainte (20) dans une première position dans laquelle la surface d'écoulement (11a) du volet de recouvrement d'une fente (11) est placée à l'intérieur de l'aile principale entre deux zones placées en étant opposées l'une à l'autre de la surface d'écoulement d'aile (7) de l'aile principale, et
**qu'**un dispositif d'appui (40) est placé sur le levier de réglage (13) de telle sorte que celui-ci, lorsque le volet Krueger (1) rentre et lorsque le volet Krueger (1) est à une position prédéterminée, vient en contact de frôlement avec ce dernier et que lorsque le volet Krueger (1) continue de rentrer, il se produit un couplage de mouvement entre ce dernier et le levier de réglage (13), de telle sorte que le levier de réglage (13) se déplace dans une deuxième position contre la force de rappel exercée par le dispositif de mise en précontrainte (20), dans laquelle le volet de recouvrement d'une fente (11) recouvre la fente existant entre le volet Krueger (1) rentré et une surface d'écoulement d'aile (7) de l'aile principale (F).

2. Aile selon la revendication 1, **caractérisée en ce**
**que** le dispositif de recouvrement d'une fente (10) présente :
- le volet de recouvrement d'une fente (11) avec la surface d'écoulement (11a) disposé sur une deuxième section d'extrémité (13b) du levier de réglage (13),
- un dispositif de logement (17) pour le logement en rotation du levier de réglage entre les première et deuxième positions sur l'aile principale, sachant que le levier de réglage (13) présente une première section d'extrémité (13a) dotée du dispositif d'appui (40) en tant que premier dispositif d'appui (40) et une deuxième section d'extrémité (13b) placée à l'opposée de la première section d'extrémité (13a) par rapport au dispositif de logement (17),
- un deuxième dispositif d'appui (50) disposé sur la deuxième section d'extrémité (13b) pour placer la deuxième section d'extrémité (13b) du levier de réglage (13) dans la position rentrée du volet Krueger (1), dans laquelle le deuxième dispositif d'appui (50) repose sur le contour extérieur (3) du volet Krueger (1).

3. Aile selon la revendication 1 ou 2, **caractérisée en ce que** le premier dispositif d'appui (40) présente un contour extérieur concave en direction du volet Krueger (1).

4. Aile selon la revendication 3, **caractérisée en ce que** le dispositif d'appui (40) présente une roue disposée de manière à pouvoir tourner sur la première section d'extrémité (13a).

5. Aile selon la revendication 4, **caractérisée en ce que** la roue du dispositif d'appui (40) est en plastique souple.

6. Aile selon l'une des revendications précédentes, **caractérisée en ce que** le volet de recouvrement d'une fente (11) est en forme de plaque.

7. Aile selon l'une des revendications précédentes, **caractérisée en ce que** le bord (16a) du volet de recouvrement d'une fente (11), qui est placé de manière adjacente à la surface d'écoulement d'aile (7) de l'aile principale, lorsque le volet de recouvrement d'une fente (11) se trouve dans sa deuxième position, est élastique.

8. Aile selon l'une des revendications précédentes, **caractérisée en ce que** le bord (16a) du volet de recouvrement d'une fente (11), qui est placé de manière adjacente à la surface d'écoulement d'aile (7) de l'aile principale (F), lorsque le volet de recouvrement d'une fente (11) se trouve dans sa deuxième position, présente un chanfrein (12) qui part de la surface d'écoulement (11a) du volet de recouvrement d'une fente (11).

9. Aile selon l'une des revendications précédentes, **caractérisée en ce que** le levier de réglage (13), via le dispositif de logement (17), est placé de manière rotative sur une ferrure de fixation (30) de l'aile principale et que le dispositif de mise en précontrainte (20) présente un ressort qui est appliqué sur le levier de réglage (13) et la ferrure de fixation (30).

10. Aile selon la revendication 9, **caractérisée en ce que** le ressort est maintenu d'une part sur une première fixation (21a) de la ferrure de fixation (30) de l'aile principale et d'autre part sur une deuxième fixation (21b) sur le levier de réglage (13), sachant que la deuxième fixation (21b) est placée entre le dispositif de logement (17) et la deuxième section d'extrémité (13b).

11. Aile selon l'une des revendications précédentes, **caractérisée en ce que** le levier de réglage (13) est incurvé, sachant que la surface tournée vers le volet de recouvrement d'une fente (11) est concave.

12. Aile selon l'une des revendications précédentes, **caractérisée en ce que** la surface d'écoulement (7) de l'aile (F) est la sous-face de l'aile (F).

13. Procédé de réglage d'un volet Krueger (1) sur une aile principale d'une aile (F) entre une position rentrée et sortie, comprenant les étapes :
lors de la rentrée du volet Krueger (1) depuis une position prédéterminée du volet Krueger (1), de couplage de mouvement d'un volet de réglage (13) et du volet Krueger (1) en plaçant un dispositif d'appui (40), formé sur le levier de réglage (13), sur le contour extérieur (3) du volet Krueger (1), de telle manière que le levier de réglage (13) soit tourné par le mouvement de rentrée du volet Krueger (1) contre une précontrainte d'un dispositif de mise en précontrainte (20) agissant entre le volet Krueger (1) et l'aile principale, et un dispositif de recouvrement d'une fente (10) disposé sur le levier de réglage (13) rentre dans une fente entre le volet Krueger (1) et
l'aile principale,
lors de la sortie du volet Krueger (1), de rotation du levier de réglage (13) via le dispositif de mise en précontrainte (20) et du couplage de mouvement du levier de réglage (13) et du volet Krueger (1) par le placement du dispositif d'appui (40) sur le contour extérieur (3) du volet Krueger (1) jusqu'à une position prédéterminée du volet Krueger (1), de telle sorte que le dispositif de recouvrement d'une fente (10), vu du contour extérieur de l'aile (7), soit déplacé dans une zone à l'intérieur de l'aile principale entre deux zones placées en étant opposées l'une à l'autre de la surface d'écoulement d'aile (7) de l'aile (F).
